## Europäisches Patentamt
## European Patent Office
## Office européen des brevets

(11) Publication number: **0 286 612**
**A2**

(12) **EUROPEAN PATENT APPLICATION**

(21) Application number: **88850103.8**

(51) Int. Cl.4: **B 29 D 30/54**

(22) Date of filing: **28.03.88**

(30) Priority: **06.04.87 SE 8701430**

(43) Date of publication of application:
**12.10.88 Bulletin 88/41**

(84) Designated Contracting States:
**AT BE CH DE ES FR GB GR IT LI LU NL SE**

(71) Applicant: **JAWE AKTIEBOLAG**
**Företagaregatan 4**
**S-262 00 Ängelholm (SE)**

(72) Inventor: **Jakobsson, Göte**
**Härjedalsgatan 5**
**S-262 00 Ängelholm (SE)**

**Westher, Rolf**
**Korgmakarevägen 6**
**S-260 91 Förslöv (SE)**

(74) Representative: **Inger, Lars Ulf Bosson**
**L + U INGER Patentbyra AB Garvaregatan 12**
**S-262 00 Ängelholm (SE)**

(54) **Process and device for recovering of tires.**

(57) The present invention relates to a process and a device at recovering of tires, particularly lorry and truck tires, using a prevulcanized tread rubber and comprising the application of an inner and an outer pressure along a foot of a tire, whereby one applies at least three contact means (10) with even parti-tion against the inner side of the tire along its foot (4), and that one applies removably to these contact means (10) a ring (13) on the outer side of the tire along its foot (4).

FIG 1

EP 0 286 612 A2

**Description**

## PROCESS AND DEVICE FOR RECOVERING OF TIRES.

TECHNICAL FIELD

The present invention relates to a process and device for recovering tires using a prevulcanized tread rubber, particularly at the recovering of lorry and truck tires and com-prising the application of an inner and an outer pressure along a tire foot.

The obect of the present invention is to obtain a possibility to simplify the work at recovering of tires using a prevulcanized tread rubber in a simple and rational way.

Background of the invention.

At the recovering of tires using a prevulcanized tread rubber it is required at the mere vulcanization process, when the new tread rubber becomes vulcanized onto the old carcass, that no air is admitted to the non-vulcanized rubber, and that the vulcanization takes place under pressure (about 6 atomspheres gauge) in an autoclave, and that the temperature is 95-120°C thereby. In order to fulfill these requirements one uses, today, in order to seal against entrance of air a cover of rubber (a so called envelope) which is applied onto the outside of the tire, which envelope is provided with a valve for the evacuation of air. The envelope extends down to the foot of the tire, i.e., the part of the tire intended to support against a rim. At the vulcanization side rings are then applied on each outer side of the tire, and a divided rim is applied which is closed by means of a bayonet joint, and further a tube is applied inside the tire, a so called vulcanization tube, provided with a valve through which one during the vulcanization in the autoclave applies a pressure of about 8 atmosphere gauge to obtain a good sealing between tire and envelope in a clamp between tube and side rings.

This process is both time consuming and circumstantial and as the rims are made out of steel the work will also become heavy.

The wearing of the tube will also become large which leads to high production costs.

Another later process which has been used comprises an expanding sealing ring consisting of a ring made of flat iron band of steel provided with a clamping handle which ring shall be applied against the foot of the tire on the side facing its center and a rubber ring to be applied between the tire and the flat bar ring, which rubber ring tightens directly against the foot of the tire. This methods exhibits drawbacks as well, as the envelope has to extend below the foot of the tire and thus becomes difficult to apply and to remove. The rubber ring has to be changed even so often, as well, which increases productions costs. It has also turned out that the final result is not always the best as an absolute tightening is not always obtained.

One has thus requested that a more simple and safer method for solving these problems.

Description of the present invention.

It has now surprisingly been shown possible to to able to solve the above mentioned problems by means of the present invention which is characterized in that one applies at least three contact means with even partition against the inner side of the tire along its foot, and that one to these contact means applies removably a ring on the outer side of the tire along its foot.

A device according to the invention is characterized in that it comprises an inner cross consisting of at least three arms provided with raidally displaceable contact means arranged to be brought into contact with a foot of a tire on the inside thereof, and a removably outer ring being fixable to said inner cross, which ring is arranged to be brought into contact with a foot of a tire on the outside thereof.

Further characterisitics are evident from the accompanying claims.

By means of the present invention it is obtained that an inner cross can be applied onto the inside of the foot of the tire in a simple and rational way, whereupon the the outer ring, suitably via a center bearing can be clamped against the inner cross and the foot of the tire and thereby provide a tightening between tire and an envelope applied thereto.

The invention will now be described in the following with reference to the attached drawing, wherein

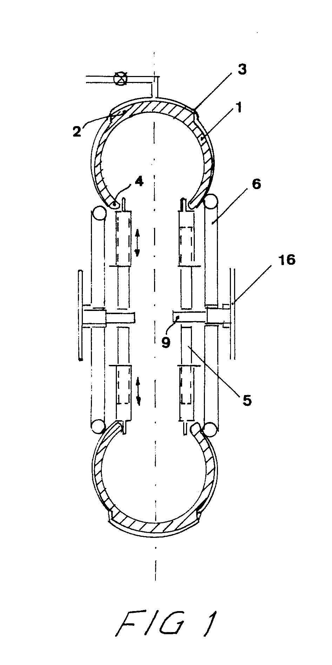

FIG. 1 shows in cross-section a tire with a preferred embodiment of the device according to the present invention arranged on either side of the tire:

FIG. 2 shows the inner part seen from above;

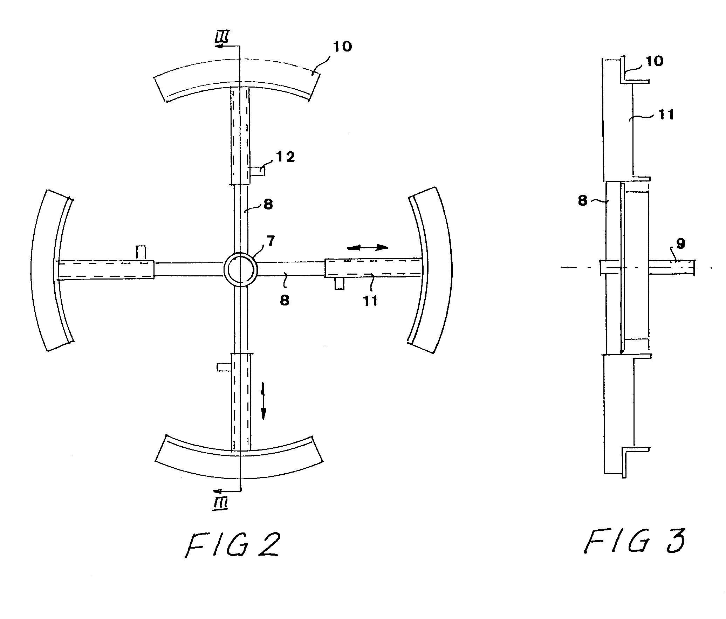

FIG. 3 shows the inner part seen along the line III-III of Fig. 2;

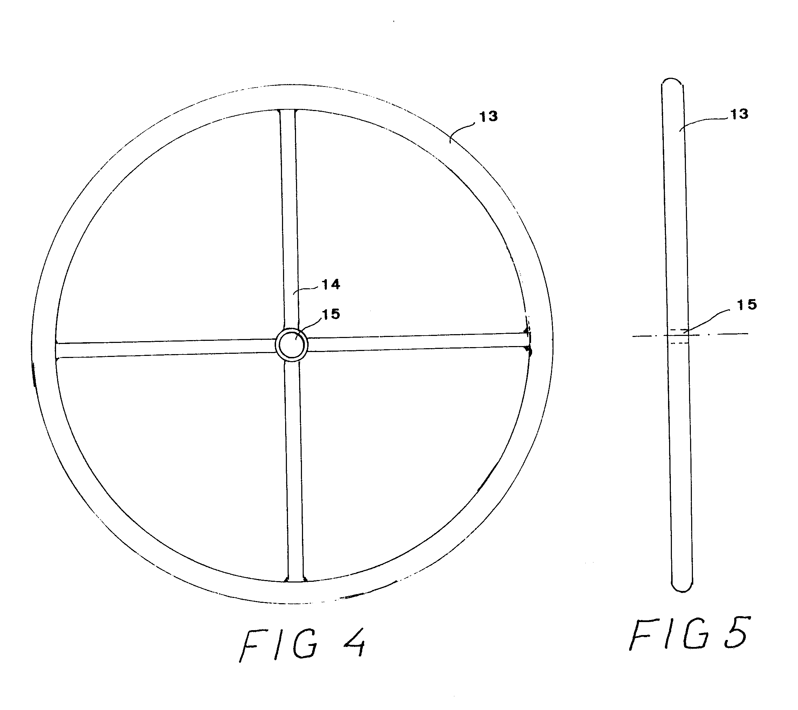

FIG. 4 shows the outer part seen from above:

FIG. 5 shows the outer part seen from the side:

FIG. J shows a device according to the prior art according to the tube method.

1 denotes a carcass with an prevulcanized tread rubber 2 applied thereto. An envelope 3 provided with a valve is applied around the tire 1, which envelope 3 extends down to the foot 4 of the tire 1.

The device according to the present invention comprises an inner part 5 and an outer part 6. The inner part 5 according to this embodiment comprises a cross 7 having four arms 8. In the center of the cross 7 a threaded screw tap 9 is fixedly arranged. On each of the arms 8, which are suitably manufactured of a tube having a polygonal ($\geq 3$ corners) cross-section contact means 10 are disposeably arranged by means of congurent tubes 11 slipped outside the arms 8. The contact means 10 comprises a somewhat arcuately shaped angle-iron to the formation of a shoulder for fitting the radius of the foot of the tire. The contact means 10 can be fixed to the arms 8 by means of friction means 12.

The outer part 6 comprises a ring 13 made of a metal tube having a circular cross-section. A four arm cross 14 is fixedly arranged inside the ring to stabilize this, the cross 14 being provided with a through hole 15 at its center for receiving the prior mentioned screw tap 9. The center tap 9 can receive a clamping nut 16, or another threaded clamping sleeve. It is apparent that the tap 9 can be loose, whereby the center of the inner cross 5 is provided with a threaded hole so that the tap 9 can be applied from the outside, the tap 9 being provided with a grip in order to facilitate its turning at clamping.

When using the device according to the invention at the vulcanization the inner part 5 is first applied, whereby the contact means 10 are brought radially towards the center. When the inner part 5 is inside the foot 4 of the tire the contact means 10 are brought outwardly, substantially equally long so that the center ends up at the center of the tire. Then the outer part 6 is applied over the inner part 5 on the outer side of the tire, whereupon the ring 13 is clamped agaisnt the outer side of the tire 1 by means of a clamping using the nut 16 or the clamping screw 9 alternatively, either at the foot 4 or shortly above this, whereby the envelope 3 is brought to a tight abutment against the tire 1.

By means of the present invention the same device can be used for different sizes of tires, both with regard to width of the tire and with regard to the diameter of the foot of the tire. It has eventually turned out in tests made that it is not essential if the outer ring is pressed exactly against the foot of the tire but abutment can take place shortly outside this. This means for example that tires having 20 and 22.5 inches diameter of the foot of the tire can use the same device.

When recovering thus two devices according to the present in vention are used viz. one on each side of the tire.

In those cases smaller tires, such as truck tires are recovered it will normally do with a three arm cross in the inner and the outer parts for obtaining a tight abutment. When working with lorry tires four arms 8 can be used at diameters of the foot of the tires of 500-600 mm. At larger diameters more contact means 10 should be used. The part of the contact means 10 of the periphery of the foot 4 of the tire should be at least 30%, which has turned out to be enough using a four arm cross at a diameter of up to 600 mm. Normally the contact means will be at least 35% or more (35-50%) of the periphery of the foot of the tire.

The arms 8 above have been said to be made out of a tube shaped material. They can of course also be made out of a flat iron construction such as one having t-shape. The cross of the outer ring 6 can in the same way be made out of a tube shaped material or a flat iron material.

## Claims

: Process at recovering of tires, particularly lorry and truck tires using a prevulcanized tread rubber and comprising the application of an inner and an outer pressure along a foot of a tire, **characterized** in that one applies at least three contact means with even partition against the inner side of the tire along its foot (4), and that one applies removably to these contact means (10) a ring (13) on the outer side of the tire along its foot (4).

2. Device for recovering of tires, particularly lorry and truck tires, using a prevulcanized tread rubber and comprising an inner and an outer contact surface against the foot of the tire, **characterized** in that it comprises an inner part (5) cosisting of at least three arms (8) provided with radially disposeable contact means (10) arranged to be in contact with a foot (4) of a tire (1) at the inner side thereof, and one to said inner part (5) removably fixable outer ring (13) arranged to be in contact with a foot (4) of a tire (1) on the outside thereof.

3. Device according to claim 2, **characterized** in that the contact means (10) have a length which taken together corresponds to at least 30% of the periphery of the foot (4) of the tire.

4. Device according to claim 3, **characterized** in that the length of the contact mens (100 corresponds to at least 35%.

5. Device according to claim 2, **characterized** in that the inner cross (5) has at least four arms (8).

6. Device according to claim 1, **characterized** in that the contact means (10) has a contact shoulder which is arcuate.

FIG 1

FIG 3

FIG 2

FIG 4

FIG 5